# EUROPEAN PATENT APPLICATION

(11) **EP 2 194 343 A1**
(43) Date of publication of application: **09.06.2010**
(21) Application number: 08829755.1
(22) Date of filing: 29.08.2008
(51) Int. Cl.: F24J 2/54, F24J 2/38

(54) **MECHANICAL SOLAR TRACKER**

(30) Priority: 31.08.2007 ES 200701823 U
(71) Applicant: Viñaresol, S.l., 26006 Logroño (La Rioja) (ES)
(72) Inventor: YECORA SAENZ, Roberto, E-26144 Corera (La Rioja) (ES)
(74) Representative: Pons Ariño, Angel
(86) International application number: PCT/ES2008/000571
(87) International publication number: WO 2009/030792

(57) **Abstract**

The invention relates to a mechanical solar tracker forming a system for tracking the position of the sun in relation to the earth, which is used to orient thermal and photovoltaic solar energy capture and conversion systems based on electromagnetic radiation dispersed or concentrated in any of the varieties thereof in order to produce good perpendicularity in dispersed capture systems and perfect focusing in concentration systems, in relation to the sun. The invention is **characterised in that** it is essentially an astronomical clock, having a construction that is practically mechanical and permanent over time, faithfully tracking the movements of the earth in relation to the sun during the operating years thereof. The invention is suitable for use in the industry involved in the conversion of clean renewable energy into energy for general use, i.e. electrical energy, thermal energy and chemical fuels such as hydrogen

## Description

### OBJECT OF THE INVENTION

This invention, as indicated by the title of this document, refers to a mechanical solar tracker which includes a tracking system of the position of the sun with respect to the Earth, with the aim of orienting thermal and photovoltaic solar energy capture and conversion systems based on dispersed or concentrated electromagnetic radiation in any of the varieties thereof, in order to produce good perpendicularity in dispersed capture systems and perfect focusing in concentration systems, in relation to the sun. This invention is characterized by being, generally speaking, an astronomical clock, with an essentially mechanical construction which is permanent over time, faithfully tracking the movements of the earth in relation to the sun during its operating years.

The invention has industrial applications in the conversion of clean renewable energy into energy for general use, i.e. electrical energy, thermal energy and chemical fuels such as hydrogen.

### BACKGROUND OF THE INVENTION

The advantages of the solar trackers in comparison with the abovementioned collectors are well known and studied, which is the reason why there are lots of inventions to increase considerably the performance of such collectors. Nowadays there are different systems that can be grouped together according to their mechanical operation in five groups:
1.- With vertical axis and azimuthal movement. This is the simplest one, after the fixed one. It is perpendicular to the sun twice a day.
2.- With horizontal axis and east/west movement. It is the most widely used for parabolic cylinder concentrators. It is never perpendicular to the sun except in installations located in the earth equator.
3.- With the two abovementioned axes. It follows the sun by means of the joint movement of the two axes: azimuthal and north/south. It is guided by complex control and position surveillance systems which are mainly electronic.
4.- With polar axis. It follows the sun by means of an axis which is parallel to the polar spin axis of the Earth. It is only perpendicular to the sun for two days when, in the revolution of the Earth around the sun, the sun is at the level of the equator.
5.- Any assembly of the previous systems in different configurations and dimensions with the aim of improving them in terms of manufacturing costs and performance obtained.

Some of the systems mentioned above use speed reducers with oversized DC/AC electric motors or actuating hydraulic cylinders, which work intermittently depending on the daily movement with respect to the sun. These intermittent movements cause high consumptions in some moments of the day whereas in other moments they are idle, as the movement depends on the needs detected by the solar positioning sensors.

Due to these intermittent movements, it is practically impossible to centre a concentration focus on the receiver, as these systems need continuous movement to be able to concentrate the solar energy in a single point, which is left out of focus with a single degree of error with respect to the perpendicular to the sun. In the case of photoelectric o thermal panels this is not so relevant. The current systems perform an azimuthal movement of sun tracking that lasts for about 14 daily hours or 60 % of the rotation. After the sun has set, the opposite cycle starts in order to return to the point where the sun rises, and therefore it has to run another 60% in the opposite direction throughout the night, totalling a 120% of one rotation of the Earth. In the movement north/south in the two-axis trackers something similar occurs. Every day the north-south movement has to rise till noon and then it descends again until reaching the sunset. Therefore, all the collectors panel has to rotate 90 degrees to the north and then 90 degrees to the south, with the resulting energy consumption.

The current shape and size of some trackers is forcing them to include a safety system to detect strong gusts of wind, automatically placing the tracker parallel to the ground and thus showing the least surface possible against the wind, guaranteeing a longer working life due to the reduction of stresses.

The current systems follow the commercial strategy of reducing the problems originated by the design of the trackers mechanics, substituting them with sophisticated electronic tracking control systems. These can be chronometric or tracking systems according to the shadow of the sun in the different sensors, with the direction of the sun being determined by means of an automated device according to the information received from these sensors. These strategies simplify the two-axis mechanics, which is opposed to the nature of the movement of the Earth with respect to the sun, but provide the controllers and actuators responsible for the tracking with a great amount of movements.

All these systems are developed to improve the performance of the solar collectors. Therefore it makes no sense, as it is often the case, to lose this performance in the consumption of the two engines that operate such trackers, especially in the two axis systems, which have more parts in motion than the single ones, therefore not complying with the renewable energy directives currently in force.

### Description of the invention

In general, the mechanical solar tracker, object of the invention, was created to solve the abovementioned problems with a similar or inferior cost, if possible.

To achieve this, the invention has a complete mechanic system, with the exception of a pulse clock, which is similar to the normal ones, but with a power which is proportionate to the operating needs of the whole system. Therefore, the movement will be continuous in terms of frequency and rotation direction. This movement is transmitted through the following phases of solar orientation, resolving them in two different parts: the rotation movement of the Earth and the revolution of the Earth around the sun throughout the year. The system is equally valid both for high and low power, with the possibility of easy escalation in size without the need of replacing the current design.

A hollow shaft must be fixed firmly to the ground, preferably by means of three bearing points, one fixed and pivoting and another two whose length can be manually extensible, to form a sort of tripod, which are joined to the fixed hollow shaft approximately in its centre. The purpose of this adjustment is to place the hollow shaft parallel to the imaginary axis around which the Earth spins in its rotation movement and, as it is in continuous movement, although insignificant in the short life of a solar tracker (25 years) this axis changes its inclination moved by the forces of precession and nutation with currently known regular cycles, so that once oriented at the start-up, no further orienting will be necessary. It must be noted that there is a variable deviation between this imaginary spin axis of the Earth and the polar axis system, as these two only coincide approximately every 25,800 years, and therefore, an orientation to the Pole Star or parallel to the polar axis would not be correct. These adjustable supports are used to counteract the errors at the time of installing the concrete shoe to support the system. In the interior of the hollow or main shaft another axis will be housed that will rotate inside the fixed axis, supported on an internal bearing located on one of the ends, that will withstand axial and running stresses with the particularity of leaving a small concentric gap for the power lines located inside the internal or secondary axis coming from the solar collectors.

The internal secondary axis rotates supporting on a primary fixed axis by means of a system of pawls operated by cams or hydraulic actuators. Such system of pawls consists of two or more machine-toothed hubs that that mesh with a ring gear firmly fixed to the secondary axis. Through frequent gear and ungear movements alternated with precise angular movements of lateral displacement of the hubs, a continuous and precise movement on the ring gear of the secondary axis can be created, avoiding the possible clearance spaces created by a typical reducer system with a spindle and ring gear. These slight movements of the hubs are controlled by a pulse clock. These pulses move a system of eccentric cams strategically located in the hubs that move as they are pushed by the cams in their continuous rotation. This system of cams may be replaced by a central hydraulic system, which would operate more than one tracker in the case of big facilities with a great number of trackers. This hydraulic system would replace the cams for cylinder-type miniactuators, also located inside the hubs, which would provide the relevant movements, which would be transmitted to the secondary axis or spin axis. With this rotation and a perfect synchronism of the pulses with the number of teeth in the ring of the secondary axis a complete rotation would be obtained approximately every 23 hours 56 minutes and 4 seconds, which is called sidereal day. With this movement and orientation of the axis, the rotation movement of the sun is tracked from the Earth. A second single ball or tapered double needle bearing, with the same inner diameter as the primary and fixed hollow shaft, will be placed in one of the ends of the primary axis, or in its central part, according to the needs of the area. An articulated crankpin will be attached to the external part of the bearing, made up of cylinders cut by an inclined plane of about 11° 43' 30", being this value subject to variations due to the nutation movement created by the moon. These cylinders rotate one against each other in opposite directions by means of a nylon or bronze slip bushing. One of them will rotate over the abovementioned bearing and the other one over a nylon or bronze slip bushing at the other end of such crankpin. If we made both cylinders of this crankpin rotate in the opposite direction one complete turn approximately every 366.25 days, we will get the revolution of the Earth around the sun to counteract the inclination of the spin axis of the Earth in the different seasons of the year. The operation of the two cylinders of the crankpin uses a system similar to the rotation movement of the secondary axis.

Instead of using a ring gear in an inner axis to move the hubs, this function can be performed by two ring gears, one for each cylinder, located in external axes, so the operation principle is similar but the shape and design of the hubs is different. The operation is also different, as this time it is performed by the fixed primary axis with respect to the crankpin assembly, which receives it through a ring gear and a pinion or through a daily movement hydraulic pulse, with an approximate angular movement of 0.98°. The different movements of the hubs over the ring gears are performed by an internal assembly of cams or hydraulic cylinders, just like the main actuator. The assembly is completed at the end, where the secondary spin axis is linked, by means of a semi-cardan pivoting joint, with the second cylinder of the crankpin through the nylon or bronze slip bushing.

This crankpin solves the yearly movement of revolution of the earth around the sun, thus creating a compact group in which, after the different energy collectors have been installed with a 90°angle with respect to the end of the secondary spin axis, such panels shall be perpendicular to the sun rays irrespective of the date and time of the year, as this assembly has the function of orienting them as if it were a clock that, instead of telling the time, indicated the position of the sun with respect to the Earth. The following less important movements are still to be solved: The Earth nutation movements that can be solved introducing wedges to modify the angle of the inclined plane of the crankpin cylinders are not relevant for the solar orientation but in future they may be necessary for new technologies with a higher level of precision. There is a variation of the distance of the sun from the Earth throughout the year due to the elliptic plane of the revolution of the Earth around the sun, and as a result, the Earth moves slower in the aphelion than in the perihelion, that is, when it is closer to the sun. This deviation can be solved, if considered relevant for any application, manufacturing the ring gears of the crankpin cylinders with an elliptic shape and at the scale with the shape of the Earth in its revolution around the sun. The pivoting joint of the secondary spin axis will also be used to advance the rotation of such axis that, with a movement of plus-minus 23º 27', alters the advance in approximately 1º throughout the whole year, thus counteracting the delay of the days due to the higher velocity of the Earth in its revolution around the sun during the perihelion. Due to the continuous spin of the system, a rotating system is required, either by means of brushes or rotating joint collector, for power extraction, thus preventing the power output cables or wires of the collectors from entangling. The operation system by means of toothed hubs and ring gear consists of two or more hubs or pawls that are geared, by means of part of a toothed circumference, with a ring gear in which it gears and ungears while making slight synchronized angular movements. This results in a semi-continuous movement, as although the pawls do not physically move, the cams responsible for synchronizing them in their positions are constantly in motion, operated by the chronometric or mechanic actuator, depending on whether it is located in the main axis or in the translation crankpin.

The pawl assembly is a part easily manufactured and operated, and no special material is necessary, as they do not withstand high movement velocities or overheating due to excessive work. An example is the rotation of the crankpin, which will give a complete rotation a year and a total of 25 rotations in its working life, being an ideal system for its slow aging and low maintenance. Another movement is the rotation, with 365 spins a year and a total amount of 6,625 spins in its 25 years of working life. Any AC/DC electric motor currently used for the operation of trackers gives these spins over the ring gear in about 5 minutes. Due to the low revolutions it will be subject to, nylon or bronze spin bushings, depending on the size, have been installed in the crankpin cylinders so that the cylinders can rotate freely, with a level of precision greater than that of the bearings, as the bushings are radial and longitudinal, perfectly adjusted and with lubrication channels in order to create a semi-sliding film to guarantee the rotation and also the resistance of the system in case of movements caused by excessive wind.

The abovementioned system is almost perfect, with all the necessary movements to obtain a precise tracking of the sun. But sometimes it is not necessary to have as much precision as in the concentration systems. In this case, part of the tracking improvement systems could be discarded, creating other systems with the same working principle but, due to the fact that they use disperse capture photovoltaic collectors, precision is not as important as the operation simplicity and the design of this device when the only movements of the Earth used are the rotation and revolution around the sun, which are the most important ones.

For an easier understanding of the characteristics of the invention, and as an integral part of this specifications, a series of drawings are included representing, without limitation, the following.

### Brief description of the drawings

Figure 1.- It is a comparative outline of the solar energy use by keeping the solar panels perpendicular or oblique to the sun rays.
Figure 2.- Schematic view of a conventional vertical axis tracker.
Figure 3a.- Schematic view of another polar axis conventional tracker. Figure 3b.- It is a variant of the conventional tracker of Figure 3a, where the polar axis is supported in two points at different height.
Figure 4.- Schematic view of a third model of conventional tracker with a better performance than the previous ones, using a solar panel with two spin axes.
Figure 5.- Schematic view of a fourth model of conventional tracker, using a horizontal axis with the inclination of the earth axis and giving one complete rotation a day.
Figure 6.- Longitudinal vertical section view of the mechanical solar tracker object of the invention.

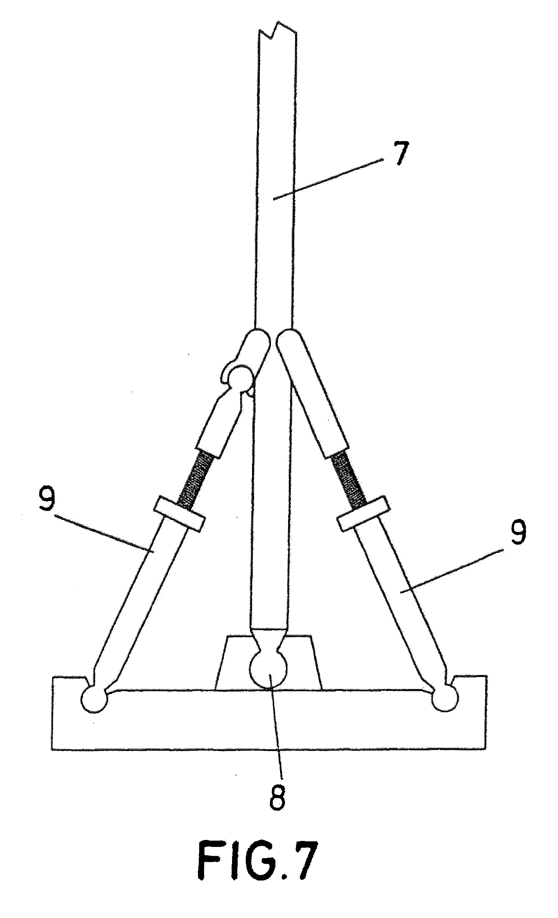

Figure 7.- Partial view in a lateral vertical section of figure 6 not including the collector.
Figure 8.- Plan view of the spin system of the secondary and internal axis that supports on the primary fixed axis by means of pawls linked to a ring firmly fixed to the secondary axis, according to the invention.
Figure 9.- Plan view of the actuator for the rotation of the secondary axis by means of a system of three synchronized pushers, according to the invention.
Figure 10.- Longitudinal vertical section view of a small mechanical solar tracker, according to the invention, and with a single photovoltaic panel.
Figure 11.- Schematic view in five positions a) to e) of different solar tracker models, according to the invention,, corresponding to different positions in which the tracker and its mechanism can be installed.

### Description of the preferred embodiment

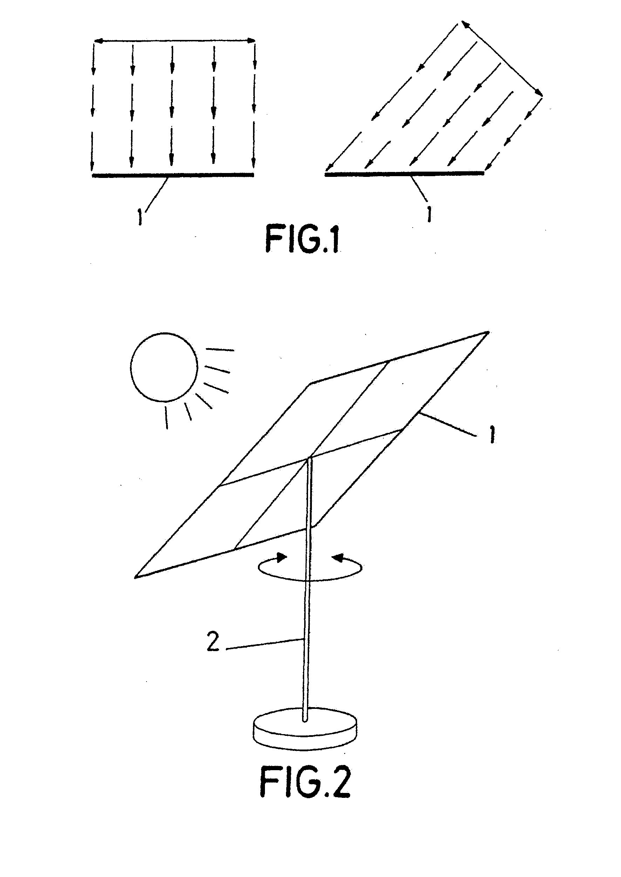

Making reference to the numeration adopted in the figures and in particular regarding figures 1 to 5, it can be observed that there are currently different kinds of trackers that always try to keep the panels (1), or the concentrators of power coming from the sun, attached to them, as perpendicular as possible to the sun rays (as shown in the left hand side of figure 1) that fall on them in order to avoid the reflection of the rays to the exterior (right hand side of figure 1), due to the crystals that protect them, and also so that the greatest part of the surface of such panels or concentrators is subject to the highest amount possible of solar radiation.

The most widely used tracker models and the improvements they include are analyzed in the following paragraphs:
Vertical axis tracker (figure 2)
It is the most widely used in the first solar parks and the easiest one to manufacture, as it only has a post (2) vertical to the ground with a bearing that makes the panels and collectors rotate clockwise in the north hemisphere of the planet and anticlockwise in the south hemisphere. This post (2), apart from the gear motor that makes it rotate, has the solar panels attached to it (1) with an angle of inclination that depends on the area of the planet in which it is located. For example, in Madrid the inclination would be approximately 45°. This makes this system perfect in areas near the earth poles but useless in areas near the equator. The main problem of this system is that at dawn and at dusk, the sun is too low for its angle, 0°, and at noon, the angle with respect to the sun is insufficient, as in summer, the sun is almost vertical to the ground.

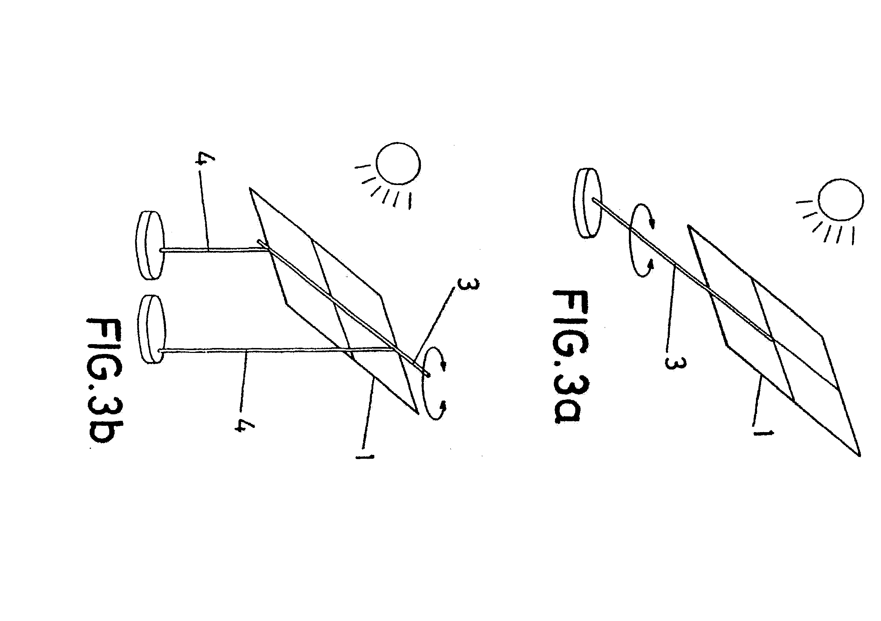

### Polar axis tracker (figure 3a y 3b)

Its performance is better than the previous one. It is hardly used, as it is very complicated, because it needs a bearing to support the diagonal stress and a gear motor to support the weight of the panels on one side of the panels at dawn and on the other side at dusk, therefore it has to be sturdier and have a greater consumption. Its main feature is its spin axis (3) (see figure 3a) which is parallel to the one of the Earth and therefore, it has a better sun tracking performance. The main problem is the inclination of the planet with respect to the elliptic traced by the Earth around the sun, causing the sun to be in a very high position with respect to the polar angle in summer, in a very low position in winter, with an approximate variation of 47º between the two seasons. Therefore it is only truly oriented to the sun during the solstices of spring and autumn, and only for a short period of time. Another variant is the support of the polar axis 3 from two or more points (posts 4) which will be of different height so that the line joining them together (axis) is parallel to the spin axis of the Earth.

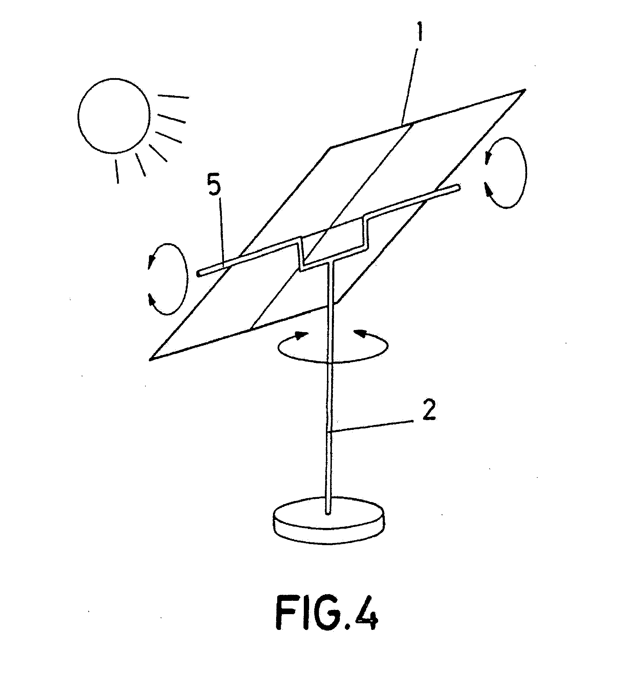

### Two axis tracker (figure 4)

It offers the best performance to date. It includes a vertical axis (2) as the first system, but also includes another horizontal axis (5) to follow the different heights of the sun during the day. It is guided by means of an electronic system orienting the axes by means of two motors or hydraulic cylinders to the perpendicular of the sun. It is the only one that in the case of blizzard or strong winds, automatically reverts to a flat position so as not to be affected by the wind. This system should have derived from the second system, the polar axis tracker, solving the height problems of that system. But due to the complexities of its construction, a vertical axis system has been chosen (2) and a horizontal axis (5) has been subsequently attached to it. This system is totally unnatural, but the advances in electronics and its low cost have permitted to simplify the mechanics, using simpler machines, letting the electronics solve the problems, with the resulting risk of failure as there are a greater number of small and fragile parts exposed to storms and to the elements. It has a main bearing that has to be strong enough to support the rotation of the whole heavy weighed mechanism and to withstand strong gusts of wind. This bearing rotates back and forth every day with the resulting loss of power in the swinging process. Then the same process will be repeated with the other axis, but without the weight of the abovementioned rotation element, although maintaining the daily swinging and the loss of energy. It must be noted that the price of this power, in particular photovoltaic power, is almost four times higher than the normal price, and therefore, being so hard to obtain and so expensive, no money should be squandered in the solar tracking if at the end the consumption of the tracker is similar to the excess of performance caused in the panels every day.

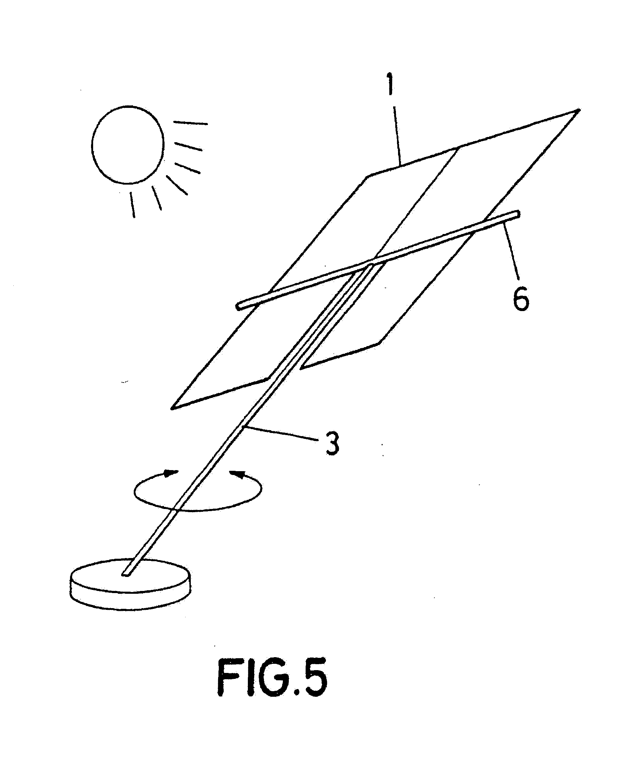

Mechanical horizontal axis tracker (figure 5). It derives from the spin axis of the Earth, which may be confused with the polar axis that joins the centre of the Earth with the Pole Star. Currently there are four main movements of the Earth with respect to the sun. Two of these movements are practically irrelevant with respect to the life of the system: approximately 25 years, with a variation of 0.33° in that working life. Because of that, this adjustment is manually performed, both in the installation and in its operation, if necessary. These movements are caused by the precession and nutation. The other two movements are more important. One of them is the rotation of the Earth, followed by the abovementioned axis, making the same rotation a day as the Earth but in the opposite direction, and as a result it always follows the sun even at night, as the sun is covered by the planet itself. Therefore, the system is continuously rotating, not going back and forth like the other systems, saving energy and protecting the panels or concentrators from the dirt when it is face down. This involves the need of using electric brushes or rotating joints for power extraction, to prevent the direct output wires of the collectors from entangling in the axis, due to this continuous rotation. The last movement is the revolution around the sun, which causes the seasons of the year and the variation of the angle of rotation with respect to the elliptic traced by the earth in its movement. This angle varies about 23.23° to the north hemisphere and another 23.23° to the south hemisphere, when the elliptic is 0°. This movement is counteracted with a rotation around an axis (6) perpendicular to the previous one and with the addition of the degrees of inclination of the earth axis, approximately 47°.

This rotation is very slow, the bushings only make one rotation a year and twenty five in all their working life, which allows this lack of speed and dynamism of such to be turned into more precision and resistance for the system. This rotation mechanism is provoked by the rotation of the Earth's axis itself, which, when making one complete rotation a day, will only provoke in the other system a movement of less than 1 ° a day, considerably reducing the energy used.

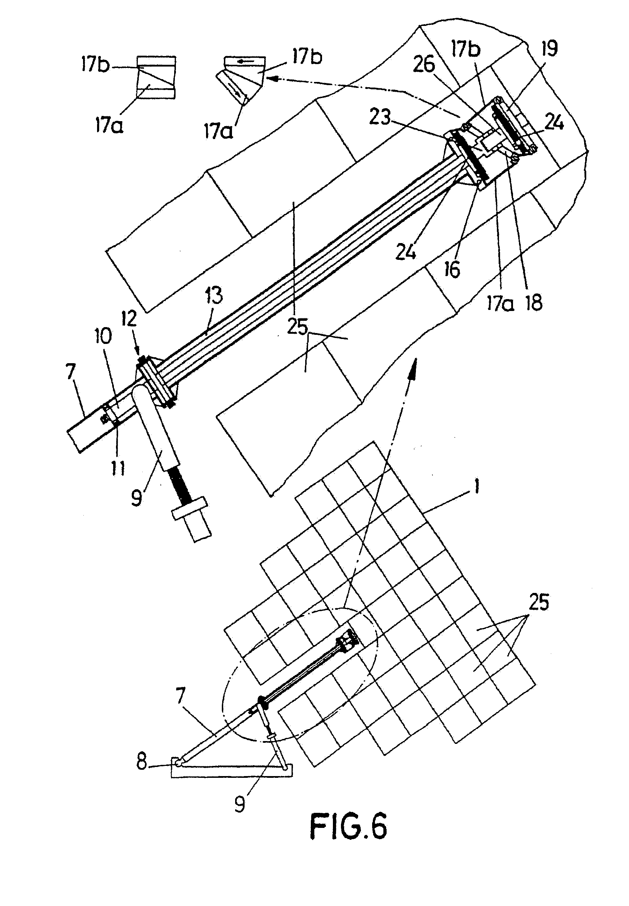

Regarding figures 6 and following, showing the mechanical solar tracker of the invention, we can see that there is a main hollow shaft or tubular section (7) which is fixed to the ground at the pivoting fixed point (8) and in the two cylinders (9) laid in the form of an inverted "V", as a tripod. In the internal side of the hollow shaft (7) the secondary axis (10) rotates through the inner bearing (11) and the system of pawls operated by cams or hydraulic actuators attached to the nozzle of the hollow shaft (7), generally referenced with number (12).

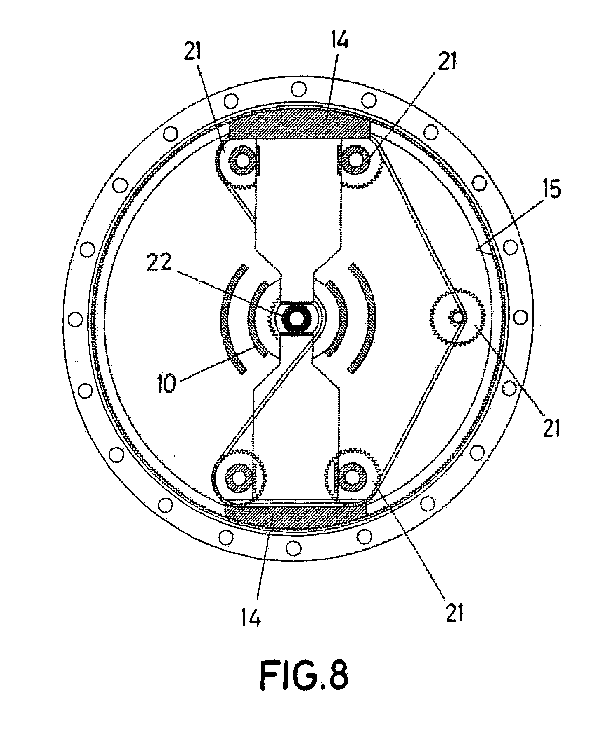

The reference (13) designs the annular gap formed between the axes (7) and (10) for the electric raceways of the solar panel (1). The system of pawls, as can be seen in figure 8, includes the toothed hubs (14) that mesh with the inner ring gear (15) firmly fixed to the secondary axis (10).

The movements of the hubs (14) are controlled by means of a pulse clock (not represented) that moves the hubs (14) through eccentric cams in a continuous rotation.

In the free end of the secondary axis (10) there is another bearing (16) and its exterior there is an articulated crankpin that consists of the two cylinders (17a) and (17b) cut by an inclined plane at 11° 43' 30" (with a variation due to the nutation movements created by the moon).

The cylinders rotate through the intermediate slip bushing (18). The cylinder (17a) rotates on the bearing (16) and the cylinder (17b) rotates on other external slip bushing (19). The hubs (14) are able to move two ring gears (15) one for each cylinder (17a) and (17b).

The crankpin assembly receives movement through the ring gear and transmission through a pinion (20), or by means of the abovementioned hydraulic pulse with a daily movement of 0.98°.

The references (21) and (22) of figure 8 design cams for the hubs (14) movement, and the reference (23) of figure 6 designs the semicardan or pivoted joint in the secondary axis (10) with the second cylinder (17b) of the crankpin through the slip bushing (19). The reference (24) designs the nylon or bronze spin bushings for the rotation of the cylinders (17a) and (17b) of the crankpin, lubricated to optimize the rotating movement.

With this arrangement, the energy collectors (25) of the solar panel (1) shall be constantly perpendicular to the rays of the sun. The reference (26) of figure 6 shows the anchoring piece at 90° of the solar collectors. The mechanical assembly includes a fully mechanic clock or chrono-positioner that, when receiving pulses or spin momentums with a set and constant frequency in terms of direction and force, is able to make a series of movements so that a receiver is always oriented to the sun from the planet Earth, with the possibility of being used as an orienting device for solar energy receivers or as orienting device in focal point concentration systems in photovoltaic, high temperature or thermodynamic concentrator receivers.

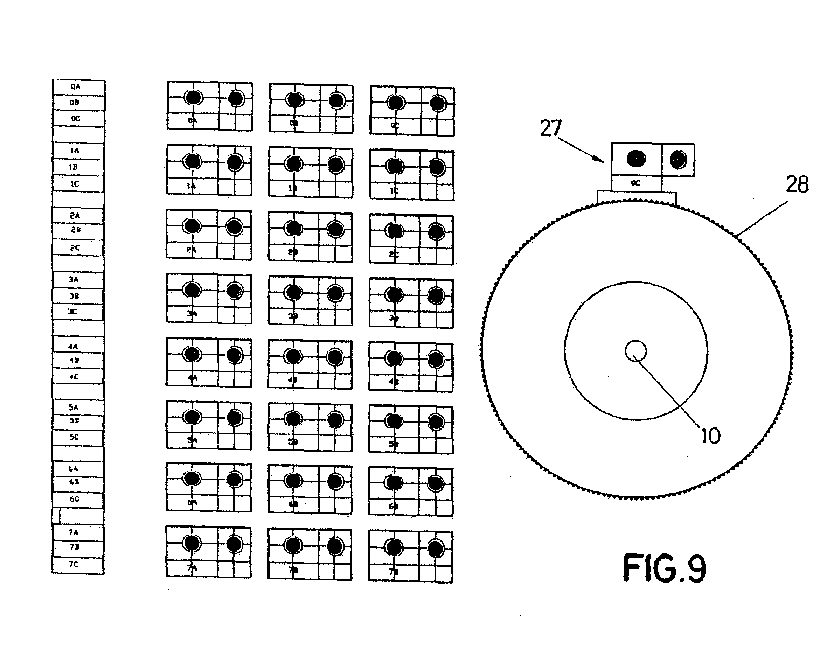

Figure 9 shows an actuator for the rotation of the secondary axis (10) by means of three pushers (27) which are synchronized and linked to a ring (28).

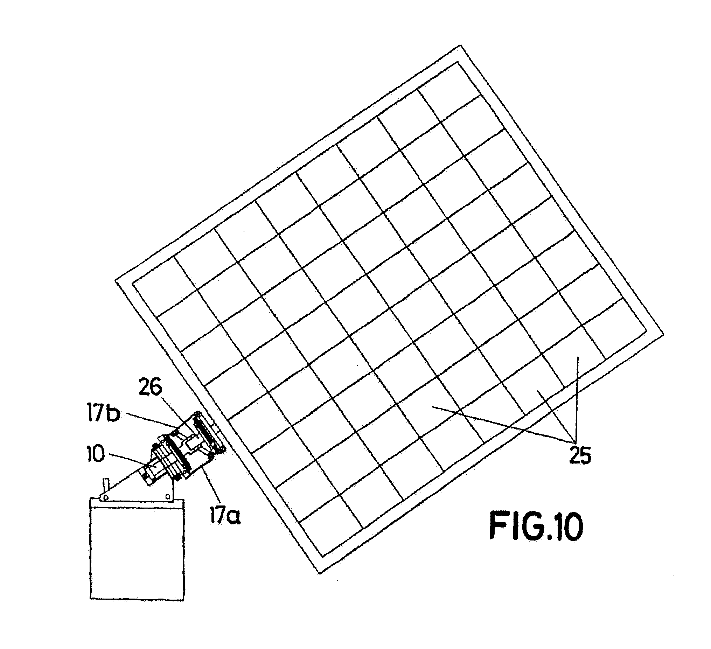

Figure 10 shows an example of the simplest solar tracker according to the invention, with just one photovoltaic panel and a 0.15 collecting element.

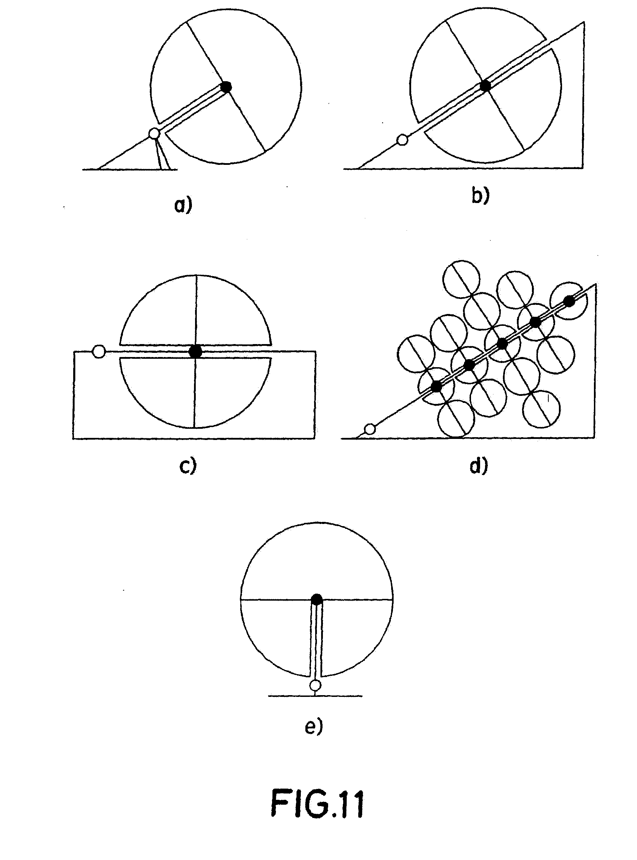

Figure 11 shows: position a), the solar tracker is installed in a tropical area with a 5 Kw collector panel; position b) shows a 2,5 Kw tropical model; position c) shows a 5 Kw to 25 Kw model installed in the equator; position d) also shows a tropical model of more than 25 Kw; and position e) shows a 5 Kw solar model.

## Claims

1. Mechanical solar tracker, designed to improve the performance of solar energy collectors and to position solar radiation concentration systems so that they face the sun directly, being able to create a reliable focal point concentrator receiver, either photovoltaic or thermodynamic, **characterized by** a mechanical assembly supported in a primary main axis (7) fixed firmly to a concrete shoe by means of three points with adjustable length and angle, so that this axis can be positioned, after the concrete has set, in such a way that it forms an angle given by the movements of precession and nutation, with respect of the plane of the elliptic formed by the Earth in its movement of revolution around the sun. The mechanical assembly includes a clock or chrono-positioner that, when receiving pulses or spin momentums with a set and constant frequency in terms of direction and force, is able to make a series of movements so that a receiver is always oriented to the sun from the planet Earth, with the possibility of being used as an orienting device for solar energy receivers or as orienting device in focal point concentration systems in photovoltaic, high temperature or thermodynamic concentrator receivers.

2. Mechanical solar tracker, according to the previous claim, **characterized by** the operation of its secondary spin axis (10), by means of a system of toothed hubs (14) fixed firmly to the main or primary axis (7); such hubs (14) move in short angular momentums, acting on a ring gear that, by means of short runs, is making it rotate in a slow but strong and precise manner; the hubs (10) are in turn operated by small cams (21, 22) or hydraulic actuators that, once they are synchronized, they gear up, rotate while pushing, ungear and rotate back to the initial position, with respect to the ring gear (15) making the continuous movements of the assembly; and the main operation system will emit pulses in such a way that the secondary axis (10) will give one complete rotation every 23 hours 56 minutes and 4 seconds, compensating the earth's daily rotation.

3. Mechanical solar tracker, according to previous claims, **characterized by** including a crankpin made up of two cylinders (17a, 17b) cut by an inclined plane with an angle of approximately 11°43' 30", being both cylinders joined together in the inclined plane, by means of two slip bushings (18, 19); one of the cylinders (17a) is in turn joined in its base, by means of a main bearing (16), to the primary axis (7), and the other cylinder (17b) is joined in its base, by means of another slip bushing (24), to the anchoring piece (26) at 90° of the solar collectors (25); making the two cylinders (17a, 17b) rotate in the opposite direction, giving one complete rotation each of them approximately every 365 days, 6 hours, 9 minutes and 10 seconds and as the anchoring piece (26) of the collectors is linked through a semi-cardan pivoting joint (23), to the secondary axis (10), the movement of the Earth around the sun throughout the year is compensated.

4. Mechanical solar tracker, according to previous claims, **characterized by** including a second and third operation system by means of hubs (14) meshed with the ring gears (15) firmly fixed to such rotating cylinders (17a, 17b), with the hubs actuating over an ring external to the hubs mechanism, located in the inner part and fixed firmly to the secondary spin axis (10); the movement of the hubs (14) is synchronized by means of an axis with a central cardan joint (23), which makes the hubs (14) rotate in the opposite direction of the two cylinders (17a, 17b) cut by the inclined plane.

5. Mechanical solar tracker, according to previous claims, **characterized by** having a drive system within the crankpin which is able to operate all the cams (21, 22) at the same time, gathering the driving force by means of a toothed pinion (20) fixed firmly to the secondary spin axis (10) which runs through a ring gear firmly fixed to the primary and fixed axis (7) creating the inner driving movement by means of the difference in size between the pinion (20) and the fixed ring gear.

6. Mechanical solar tracker, according to previous claims, **characterized by** being a mechanical assembly whose features make it suitable both for big size tracking devices and for orientation systems of small collectors or unicellular collectors, with the possibility of using the same design for an unlimited array of sizes and uses aimed at the tracking of solar radiation.

7. Mechanical solar tracker, according to previous claims, **characterized by** having an advance system of the rotation of the secondary axis (10) making this axis move forwards or backwards with respect to its normal position, the number of angular degrees that may be necessary, counteracting the difference of velocity of the Earth in the aphelion and perihelion of its movement of revolution around the sun, with this advance being controlled by the semi-cardan joint (23) of the inside of the crankpin, turning its rotation movements into a forward or backward movement of such secondary axis (10) with respect to the normal position.
